# EUROPEAN PATENT SPECIFICATION

(11) **EP 4 514 542 B1**
(45) Date of publication and mention of the grant of the patent: **03.06.2026**
(21) Application number: 22726131.0
(22) Date of filing: 29.04.2022
(51) Int. Cl.: B04B 1/08, B04B 7/14, B04B 11/02, B01D 17/02, B01D 17/12

(54) **METHOD AND SYSTEM FOR PURIFICATION OF A CONTAMINATED PRODUCT**
VERFAHREN UND SYSTEM ZUR REINIGUNG EINES KONTAMINIERTEN PRODUKTS
PROCÉDÉ ET SYSTÈME DE PURIFICATION DE PRODUIT CONTAMINÉ

(43) Date of publication of application: 05.03.2025
(73) Proprietor: SKF MFR Technology AB, 12030 Stockholm (SE)
(72) Inventor: HURNASTI, Lasse, 14141 Huddinge (SE)
(74) Representative: Kohl, Thomas
(86) International application number: PCT/EP2022/061555
(87) International publication number: WO 2023/208369

(56) References cited:
- EP-A1- 3 085 449
- GB-A- 191 311 927
- US-A- 1 683 424
- HOLTKAMP P A: "THEORY OF DISC-STACK CENTRIFUGES FOR THE OILFIELD INDUSTRY", PETROLE ET TECHNIQUES, ASSOCIATION FRANCAISE DES TECHNICIENS DU PETROLE. PARIS, FR, no. 392, 1 December 1994 (1994-12-01), pages 58 - 69, XP000491372, ISSN: 0152-5425

## Description

### TECHNICAL FIELD OF THE INVENTION

The present invention relates to a method and a system for purification of a contaminated product.

### BACKGROUND OF THE INVENTION

Purification of oils, such as for example slop oil, waste oil, slurry oil, crude oil, industrial oil, petroleum products or bio-oils is important for the possibility to use/reuse oils and therefore an important factor for the environmental future and the limited nature resources of oils. Purification of slop oil (and waste oil, hereafter only referred to as slop oil) is problematic in many ways. Slop oil can comprise oil, water, particles and emulsion phase. The particles can stabilize the emulsion phase and complicate a purification process. Purification of industrial emulsions comprising water and oil, such as for example cutting fluids is also an important environmental issue.

In slop oil treatment, centrifuge systems, such as disc stack centrifugal separators, are often used for example for separation of oil and water. Disc stack separators having disc holes are known for example from EP-A-3,085,449 A1.

Slop oils comprise different ingredients, such as different types of oils, water and particles, in different amounts. Hereby a composition of the slop oil will differ between each batch of slop oil to be purified. It may be hard to achieve a good purification result when different contaminated oils, such as different batches of slop oils are purified in the same system. For example, the amount of water in the contaminated oil to be purified may differ largely between different batches. Furthermore, water which has been separated from the contaminated oil in a disc stack centrifugal separator, often needs to be further purified in a following purification step.

### SUMMARY

An object of the present invention is to provide an improved method and system for purification of a contaminated product comprising light phase and heavy phase.

A further object of the invention is to provide a method and a system by which both the oil part and the water part of a contaminated oil can be efficiently purified.

This is achieved by a method, a system and a computer program product according to the independent claims.

According to one aspect of the invention a purification system for purification of a contaminated product is provided, said purification system comprising:
- a disc stack centrifugal separator, wherein said disc stack centrifugal separator comprises:
   ∘ an inlet for receiving the contaminated product to be purified in said disc stack centrifugal separator;
   ∘ a disc stack comprising a number of stacked discs, wherein each disc has a form of a truncated cone having a curved surface area limited by a base periphery and a top periphery, wherein said curved surface area comprises distribution holes separated around a circumference of the disc, wherein the distribution holes are provided for allowing fluid distribution between the discs in the disc stack, wherein said distribution holes are sized and positioned for distributing the contaminated product to be purified over a distribution part of the curved surface area of the disc, wherein said distribution part is extending around the circumference of the disc and over 20%-70% of a total distance, d, between the base periphery and the top periphery, wherein said distribution part of the curved surface area is provided closer to the base periphery than to the top periphery;
   ∘ at least one light phase outlet connected to the disc stack for transferring separated light phase out from the disc stack centrifugal separator; and
   ∘ at least one heavy phase outlet connected to the disc stack for transferring separated heavy phase out from the disc stack centrifugal separator;
- at least one pressure control device provided in connection with at least one of the light phase outlet of the disc stack centrifugal separator and the heavy phase outlet of the disc stack centrifugal separator, whereby a level of backpressure provided to the light phase outlet and/or the heavy phase outlet can be controlled by controlling the at least one pressure control device, whereby a position of an interface between a light phase and a heavy phase in the disc stack during purification of the contaminated product will be adjusted in response to said controlling of the backpressure.

According to another aspect of the invention a method for purification of a contaminated product in a purification system according to the invention is provided. Said method comprises the steps of:
- providing, S1, the contaminated product into the disc stack centrifugal separator;
- separating, S2, the contaminated product in the disc stack centrifugal separator into a light phase and a heavy phase;
- retrieving, S3, the separated light phase from the light phase outlet of the disc stack centrifugal separator and retrieving the separated heavy phase from the heavy phase outlet of the disc stack centrifugal separator;
- determining, S4, a proportion of heavy phase content in the contaminated product which is to be purified;
- controlling, S5, a backpressure provided to the heavy phase outlet and/or the light phase outlet of the disc stack centrifugal separator and hereby controlling a position of an interface between heavy phase and light phase during purification of the contaminated product in the disc stack of the disc stack centrifugal separator, said controlling being dependent on the determined proportion of heavy phase content in the contaminated product.

According to another aspect of the invention a computer program product comprising instructions which, when executed in a processor in a control system of the purification system according to the invention, cause the control system to perform the method according to the invention.

Hereby a flexible system is achieved which can be effectively used for purification of different types of contaminated products comprising different proportions of oil and water. Furthermore, thanks to the distribution holes which are sized and positioned for distributing fluid over a comparatively large part of a surface of the discs, a larger part of the disc stack can be used for purification of the heavy phase. In prior art systems purification of heavy phase is not possible or prioritized. Such purification is instead performed in a following purification step. According to the invention both light phase and heavy phase can be efficiently purified in the same disc stack. By controlling the position of the interface between the light phase and the heavy phase in the disc stack in dependence of a determined proportion of heavy phase in the contaminated product to be purified, the interface can be moved closer to a center of the disc stack when a proportion of heavy phase in the contaminated product is increasing. Hereby a larger part of the disc stack can be used for purification of the heavy phase. For efficient purification of both light phase and heavy phase of a contaminated product comprising a significant amount of both heavy phase and light phase, the position of the interface should be controlled to be within the distribution part of the curved surface area. Hereby one part of the disc stack is used for heavy phase purification and one part is used for light phase purification. The interface position is moved closer to the center of rotation of the centrifugal separator when the amount of heavy phase increases whereby a larger part of the disc stack will be used for heavy phase purification. For a contaminated product comprising a very small proportion of heavy phase, i.e. major part is light phase and there is less need for purification of the heavy phase, the interface position can be moved further out from the center, outside the distribution part and possibly even outside an outer edge of the disc stack. Hereby the whole disc stack can be used for light phase purification. For a contaminated product comprising a major part of heavy phase (i.e. only small amounts of light phase), a larger part of the disc stack may be needed for the heavy phase purification and the interface position can be moved further towards the center of rotation of the centrifugal separator. The interface position can even be controlled to be positioned inside the distribution part.

Thanks to the comparatively large size of the distribution part (compared to prior art products having smaller, circular distribution holes) the interface between heavy phase and light phase in the disc stack can be provided further into the disc stack and hereby a larger part of the disc stack can be used for heavy phase purification. The interface can be positioned at different locations inside the distribution part for efficient purification of both light phase and heavy phase. However, the interface can also be positioned outside the distribution part, for example if purification of only one phase is needed.

According to the invention the proportion of heavy phase in the contaminated product to be purified is determined and the control of the position of the interface is provided in dependence of said determined proportion. This can be an automated control system whereby a method and system are achieved by which purification is automatically optimized for different contaminated products to be purified.

Hereby a flexible method and system is achieved in which different types of contaminated products comprising different proportions of heavy phase and light phase can be efficiently purified in the same system. Furthermore, both light phase and heavy phase are purified in the centrifugal separator.

In one embodiment of the invention said distribution part is extending around the circumference of the disc and over 25%-60% of the total distance, d, between the base periphery and the top periphery.

In one embodiment of the invention the purification system comprises further a heavy phase determination arrangement positioned in the purification system and configured for determining a proportion of heavy phase content in the contaminated product which is to be purified in the purification system.

In one embodiment of the invention the purification system further comprises a control system which is provided in communication contact with the heavy phase determination arrangement and with the at least one pressure control device, wherein said control system is configured to control the at least one pressure control device in dependence of the proportion of heavy phase content in the contaminated product determined by the heavy phase determination arrangement.

In one embodiment of the invention said control system is configured to control the at least one pressure control device such that the backpressure provided to the heavy phase outlet and/or light phase outlet is adjusted continuously or repeatedly at predefined intervals.

In one embodiment of the invention the control system is configured to control the backpressure such that a position of an interface between heavy phase and light phase during purification of the contaminated product in the disc stack is moved closer to a center of rotation, c, of the disc stack for increasing proportions of heavy phase content in the contaminated product.

In one embodiment of the invention the heavy phase determination arrangement comprises one or more of: a water in oil sensor provided in connection with the inlet flow sensors provided in connection with one or more of the inlet, the light phase outlet and the heavy phase outlet and a fluid level sensor or load sensor provided in a heavy phase collection tank connected to the heavy phase outlet.

In one embodiment of the invention said distribution holes are elongated holes extending in a direction from the base periphery to the top periphery.

In one embodiment of the invention said distribution holes have a length, 1, being between 20%-70% or between 25%-50% of the distance, d, between the base periphery and the top periphery and wherein said distribution holes are positioned closer to the base periphery than to the top periphery.

In one embodiment of the invention the purification system further comprises at least one pressure sensor which is provided in fluid connection with at least one of the light phase outlet or the heavy phase outlet, wherein said at least one pressure sensor is provided in communication contact with said control system and whereby said control system is configured to control said at least one pressure control device further in dependence on a reading from said at least one pressure sensor.

In one embodiment of the invention the purification system further comprises a contaminated product tank comprising contaminated product to be purified, wherein said contaminated product tank comprises an outlet which is fluidly connected to the inlet of the disc stack centrifugal separator possibly via one or more further oil treatment units.

In one embodiment of the invention said at least one pressure control device is at least one control valve provided to a light phase fluid line connected to the light phase outlet and/or to a heavy phase fluid line connected to the heavy phase outlet.

In one embodiment of the invention said step of controlling, S5, comprises controlling the backpressure provided to the heavy phase outlet and/or the light phase outlet in dependence of the determined proportion of heavy phase content in the contaminated product such that the disc stack can be used for purification of both the light phase and the heavy phase, whereby the method is a method for purification of a contaminated product wherein both the light phase and the heavy phase can be purified in the disc stack of the disc stack centrifugal separator.

In one embodiment of the invention the step of controlling, S5, a backpressure comprises controlling the backpressure such that the position of the interface between heavy phase and light phase in the disc stack is moved closer to a center of rotation, c, of the disc stack for increasing proportions of heavy phase content in the contaminated product.

In one embodiment of the invention said steps of determining, S4, a proportion of heavy phase content and controlling, S5, a backpressure are performed continuously or repeatedly at predefined intervals during purification of contaminated product.

In one embodiment of the invention the step of determining, S4, a proportion of heavy phase content comprises one or more of: determining a proportion of heavy phase in the contaminated product using a water in oil sensor provided in connection with the inlet, measuring and comparing flows by use of flow sensors provided in connection with one or more of the inlet, the light phase outlet and the heavy phase outlet and measuring a fluid level or a load by a fluid level sensor or load sensor provided in a heavy phase collection tank connected to the heavy phase outlet.

In one embodiment of the invention said step of controlling, S5, a backpressure comprises controlling the pressure control device provided in connection with the heavy phase outlet and/or the pressure control device provided in connection with the light phase outlet of the disc stack centrifugal separator.

### BRIEF DESCRIPTION OF THE DRAWINGS

Figure 1 shows schematically an oil purification system according to one embodiment of the invention.
Figure 2A shows schematically a cross section of a part of a disc stack centrifugal separator with a disc stack comprising discs having a comparatively small distribution part which may be used in prior art systems and Figure 2B shows a perspective view of some of the discs in the disc stack having circular and comparatively small distribution holes.
Figure 3A shows schematically a cross section of a part of a disc stack centrifugal separator according to one embodiment of the invention and Figure 3B shows a perspective view of some of the discs in the disc stack.
Figure 4A shows schematically a cross section of a part of a disc stack centrifugal separator and Figure 4b shows a perspective view of some of the discs in the disc stack according to the same embodiment of the invention as shown in Figures 3A and 3B but with a different position of an interface between heavy phase and light phase illustrated.
Figure 5A shows schematically a cross section of a part of a disc stack centrifugal separator and Figure 5B shows a perspective view of some of the discs in the disc stack according to the same embodiment of the invention as shown in Figures 3A and 3B but with a different position of an interface between heavy phase and light phase illustrated.
Figure 6 is a flow chart of a method according to one embodiment of the invention.

### DETAILED DESCRIPTION OF THE EMBODIMENTS

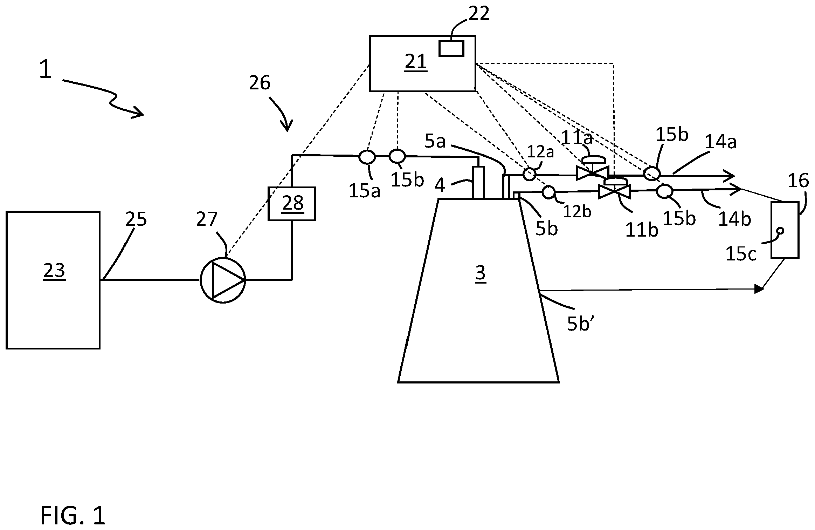

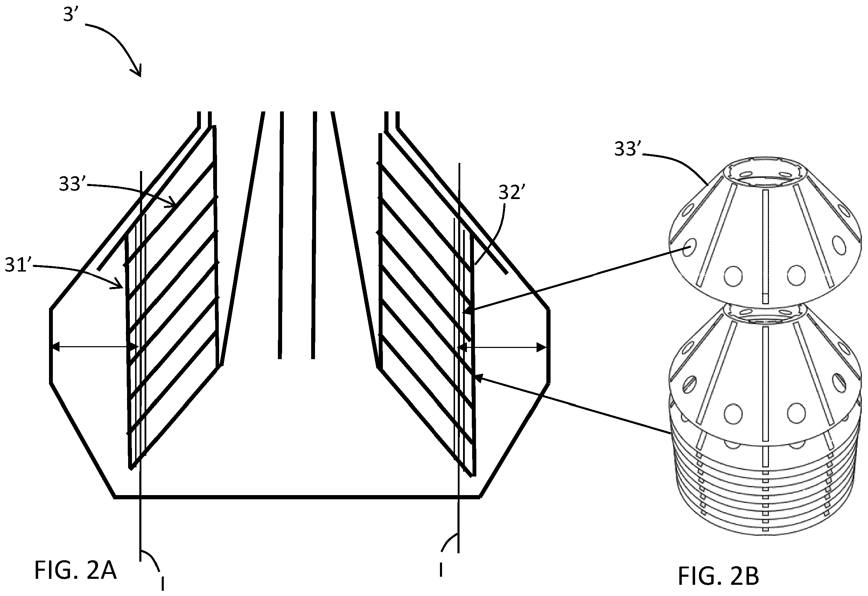

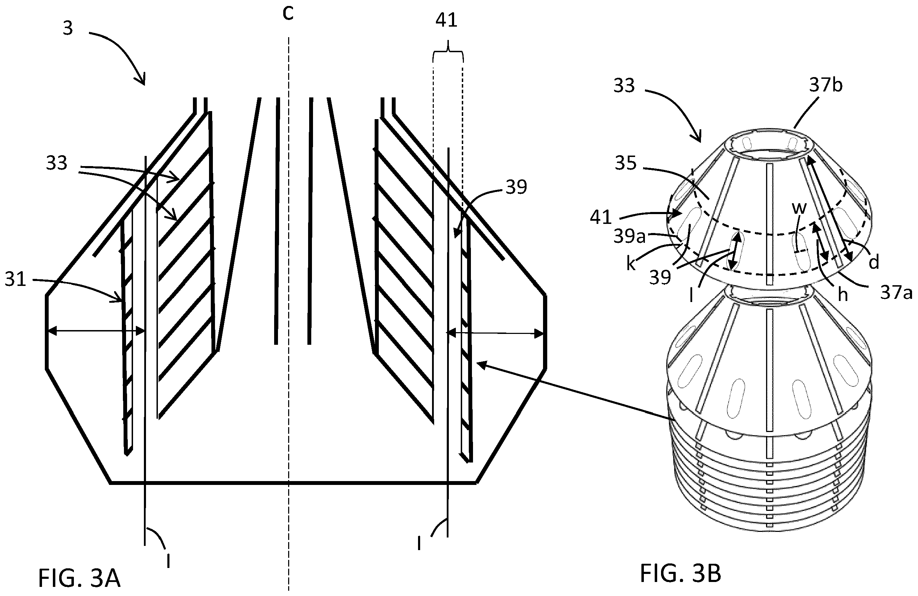

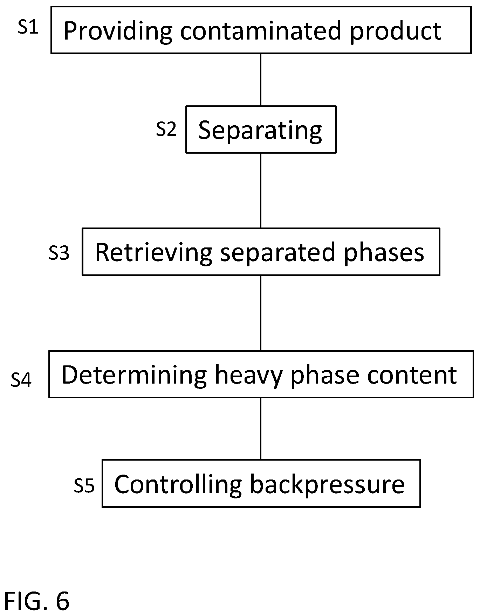

Figure 1 shows schematically a purification system 1 according to one embodiment of the invention. Figure 6 is a flow chart of a method according to one embodiment of the invention. Figures 3-5 illustrate the principle according to the invention in a schematic representation of some parts of a disc stack centrifugal separator 3. Figure 2 is provided as a schematic reference to a centrifuge which may be used in prior art systems. The dimensions, positions and number of distribution holes in the discs are however only schematically illustrated and are not a real illustration of an actual prior art product. Figures 2A and 2B are only provided for giving a schematic illustrative comparison between different types of distribution holes.

The purification system 1 comprises a disc stack centrifugal separator 3. The disc stack centrifugal separator 3 is schematically shown in Figure 1 to comprise an inlet 4 through which a contaminated product to be purified can be provided into the disc stack centrifugal separator 3. The contaminated product can comprise heavy phase and light phase (also referred to as water and oil) in different proportions. In Figure 1 a contaminated product tank 23 is also schematically shown comprising an outlet 25 which is fluidly connected by at least one fluid connection 26 to the inlet 4 of the disc stack centrifugal separator 3. A pump 27 is also shown connected in the at least one fluid connection 26 for pumping the contaminated product from the contaminated product tank 23 to the inlet 4 of the disc stack centrifugal separator 3. In some embodiments of the invention other treatment units 28 can be provided in the at least one fluid connection 26 between the contaminated product tank 23 and the disc stack centrifugal separator 3. These other treatment units 28 are only schematically shown as one unit. The other treatment units 28 can for example comprise one or more filters, one or more mixing units, a separation aid adding device, one or more buffer tank, one or more settling tanks or one or more further centrifugal separators.

The disc stack centrifugal separator 3 comprises furthermore at least one light phase outlet 5a and at least one heavy phase outlet 5b, 5b'. The contaminated product is separated in the disc stack centrifugal separator 3 into a light phase and a heavy phase whereby a light phase will be retrieved from the disc stack centrifugal separator 3 from the light phase outlet 5a and a heavy phase will be retrieved from the disc stack centrifugal separator from the heavy phase outlet 5b, 5b' after the separation.

Figures 3A, 4A and 5A show schematically cross sections of parts of a disc stack centrifugal separator 3. These are only schematic principal views for a disc stack centrifugal separator 3 which can be used for the invention. There are different types of disc stack centrifugal separators 3 which can be used. Some examples are continuously discharging centrifuges, such as nozzle centrifuges (separator) and other examples are intermittent discharging centrifuges. According to the invention a backpressure provided to the heavy phase outlet 5b and/or the light phase outlet 5a of the disc stack centrifugal separator 3 is controlled whereby a position of an interface, I, between heavy phase and light phase during purification of the contaminated product in a disc stack 31 of the disc stack centrifugal separator 3 also is controlled. In a continuously discharging centrifuge, such as a nozzle centrifuge, a position of the interface, I, between heavy phase and light phase in the disc stack 31 can be directly controlled by controlling the backpressure provided to one of the heavy phase or light phase outlet 5a, 5b. However, for an intermittent discharging centrifuge a position of an interface, I, between the light phase and the heavy phase in the disc stack is usually fixedly set by the positioning of a gravity disc to a heavy phase outlet chamber (also called water paring chamber) and a level ring to a light phase outlet chamber (also called oil paring chamber) of the disc stack centrifugal separator. If the position of the interface between heavy phase and light phase in the disc stack needs to be adjusted the gravity disc and/or level ring can be changed to another one having another inner diameter whereby the position of the interface between heavy phase and light phase in the disc stack will be moved. If an intermittent discharging type centrifuge is to be used for this invention the centrifuge needs to be provided with a heavy phase outlet chamber and/or a light phase outlet chamber in which a fluid level can be controlled. This can be achieved for example by removing a gravity disc or by providing a gravity disc with a comparatively large inner diameter. Hereby the heavy and/or light phase outlet chamber of the disc stack centrifugal separator will allow for a fluid level to be controlled to different positions. By controlling the fluid level in the heavy and/or light phase outlet chamber the position of the interface between heavy phase and light phase in the disc stack 31 will also be moved. The fluid level in the heavy and/or light phase outlet chamber can be moved by controlling a back pressure provided to the heavy and/or light phase outlet 5a, 5b of the centrifugal separator 3.

An inlet 4, a light phase outlet 5a and a heavy phase outlet 5b of the disc stack centrifugal separator 3 are schematically shown in Figure 1. Furthermore, a second heavy phase outlet 5b' of the disc stack centrifugal separator 3 is schematically shown in Figure 1. A second heavy phase outlet 5b' is only provided in some types of disc stack centrifugal separators, such as in continuously discharging disc stack centrifugal separators. In Figures 3-5 parts of a disc stack centrifugal separator 3 which can be used in the purification system 1 according to the invention is schematically shown. In Figures 3A, 4A and 5A a disc stack 31 of the disc stack centrifugal separator 3 is schematically shown in cross section and in Figures 3B, 4B and 5B some of the discs 33 are shown separate in a perspective view. The heavy and light phases are separated in this disc stack 31 according to what is well known for disc stack centrifugal separators.

In Figures 2A and 2B a disc stack centrifugal separator 3' is schematically shown. As discussed above this is not an illustration of a real prior art product but just given as a schematic comparison in relation to the invention which is illustrated in Figures 3-5. A disc stack 31' comprising a number of discs 33' is shown in cross section in Figure 2A. Some of the discs 33' are separately shown in perspective in Figure 2B. The discs 33' comprise distribution holes 39' provided for allowing fluid distribution between the discs 33' in the disc stack 31'. An interface, I, between a heavy phase and a light phase is illustrated to be positioned in the middle of the distribution holes 39'. In prior art systems the interface between the heavy phase and the light phase in the disc stack 31' should suitably be positioned somewhere between a position just outside a disc stack outer edge 32' and a middle of the distribution holes 39'. With such a location of the interface position the flow will be distributed evenly giving same flow rate between every disc 33' in the disc stack 31'. If the interface position, I, is going too far outside the disc stack edge 32', oil will be lost into the water outlet. The so-called "water lock" is lost and oil is going out the wrong way unseparated. If the interface position, I, is located from the middle of the distribution holes 39' and inwards this will be acting as a flow restriction since most of the distribution holes 39' will have a water density level where the incoming oil feed is provided. This density difference creates an uneven distribution in the disc stack 31' and consequently poor separability. The position of the interface, I, is hereby rather limited for a such a system having comparatively small distribution holes 39'.

In Figures 3A, 4A and 5A parts of a disc stack centrifugal separator 3 which can be used in the purification system 1 according to the invention is schematically shown in cross section. An interface, I, between heavy phase and light phase is illustrated at different positions within the disc stack 31 in Figures 3A, 4A and 5A. The disc stack centrifugal separator 3 comprises a disc stack 31 which is shown in cross section. The disc stack 31 comprises a number of stacked discs 33. Each disc 33 in the disc stack 31 has a form of a truncated cone having a curved surface area 35 limited by a base periphery 37a and a top periphery 37b. In Figures 3-5 it is shown that all discs 33 are identical. Other discs having differing features and sizes may however also be provided in the disc stack centrifugal separator according to the invention. There may be additional discs provided in connection with the disc stack 31 which may have another design. For example, there are examples of disc stacks where one end of the disc stack comprises discs of a smaller size. Such examples of disc stacks should also be covered by this invention.

The curved surface area 35 of each disc 33 comprises distribution holes 39 separated around a circumference of the disc 33. The distribution holes 39 are provided for allowing fluid distribution between the discs 33 in the disc stack 31. The distribution holes 39 are sized and positioned for distributing the contaminated product to be purified in the disc stack centrifugal separator 3 over a distribution part 41 of the curved surface area 35 of the disc 33. The distribution part 41 is extending around the circumference of the disc 33 and over 20%-70% of a total distance, d, between the base periphery 37a and the top periphery 37b. In one embodiment of the invention the distribution part 41 is extending around the circumference of the disc 33 and over 25%-60% of the total distance, d, between the base periphery 37a and the top periphery 37b. Hereby the distribution part 41 is defined as a band around the disc 33 having a height, h, being between 20%-70% or between 25%-60% of the distance, d, between the base periphery 37a and the top periphery 37b. Said distribution part 41 of the curved surface area 35 is provided closer to the base periphery 37a than to the top periphery 37b. A first end 39a of each distribution hole 39, which first end 39a is the end of the distribution hole 39 which is provided closest to the base periphery 37a, can in some embodiments of the invention be positioned at a distance, k, from the base periphery 37a which can be from 0-40% of the total distance, d, between the base periphery 37a and the top periphery 37b.

According to one embodiment of the invention, as shown in Figures 3-5 the distribution holes 39 are extended along a direction between the base periphery 37a and the top periphery 37b within the distribution part 41 of the curved surface area 35. However, other alternatives are possible, where for example a number of separate distribution holes are provided along a direction between the base periphery 37a and the top periphery 37b_within the distribution part 41 of the curved surface area 35. In some embodiments said distribution holes 39 are elongated holes extending in a direction from the base periphery 37a to the top periphery 37b. Said distribution holes 39 may have a length, 1, being between 20%-70% or between 25%-50% of a distance, d, between the base periphery 37a and the top periphery 37b. Said distribution holes 39 are positioned closer to the base periphery 37a than to the top periphery 37b. A width, w, of the distribution holes 39 will depend on the size of the centrifugal separator. The width, w, can in some embodiments be between 5-60 mm. The number of distribution holes 39 around the circumference of the disc 33 corresponds in some embodiments of the invention to the number of distribution channels/tubes which are supplying incoming feed to the disc stack 31. Hereby, in some embodiments of the invention there is one distribution hole 39 provided to each distribution channel. The number of distribution channels is dependent on type and size of centrifugal separator.

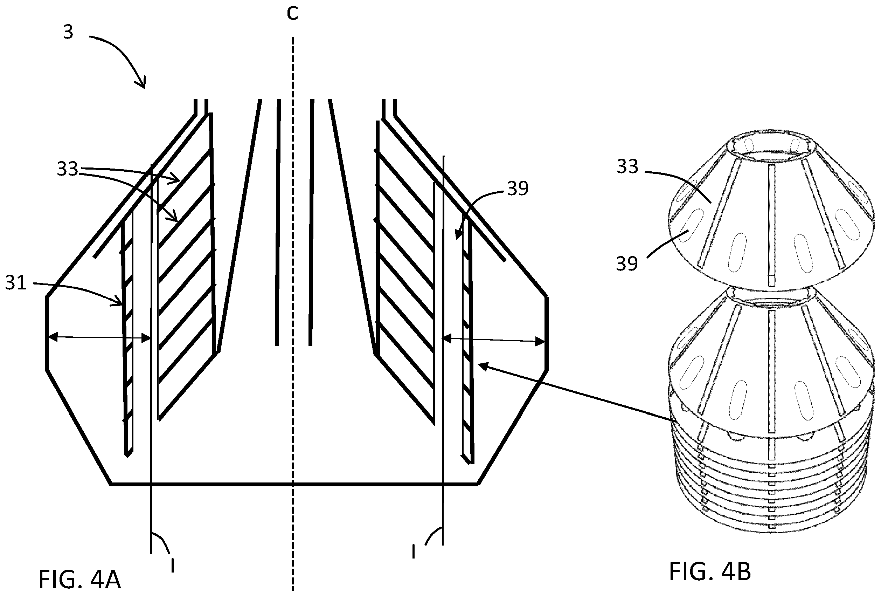

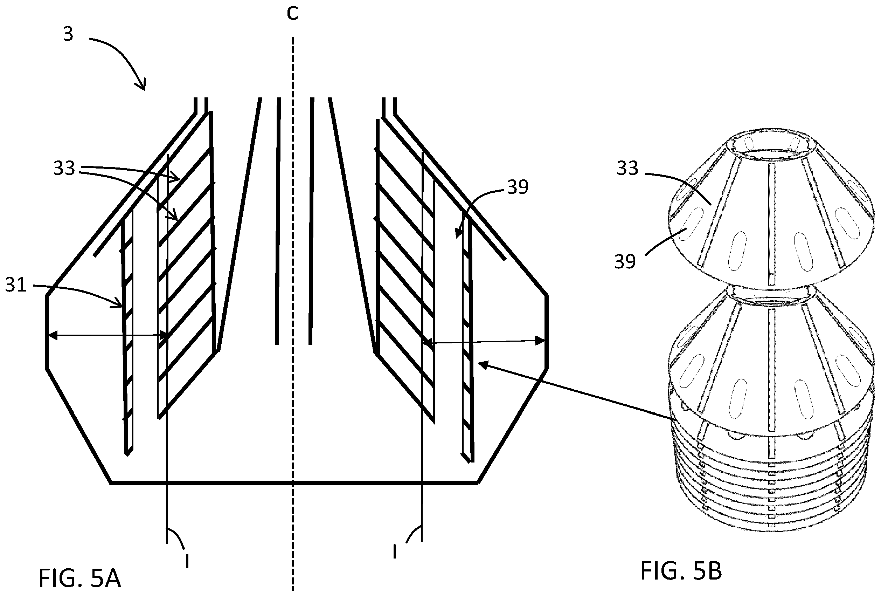

Hereby, according to the invention a larger part of a surface area of the disc 33 can be used for fluid distribution compared to in prior art systems where smaller distribution holes are used as for example schematically illustrated in Figures 2A and 2B. Hereby distribution of fluid is allowed over a larger part of the discs 33 in the disc stack 31. This is illustrated in Figures 3A, 4A and 5A. The distribution holes 39 are aligned and can be seen in cross section as an opening through the disc stack 31. Thanks to the larger distribution holes 39 and larger distribution part 41 according to the invention in comparison with prior art, a position of an interface, I, between heavy phase and light phase within the disc stack 31 during separation can be varied more compared to what is possible in prior art disc stacks (as illustrated in Figures 2A and 2B). Hereby a larger part of the disc stack 31 can be used for purification of the heavy phase. According to the invention a position of the interface, I, between heavy phase and light phase in the disc stack 31 is controlled in dependence of the proportion of heavy phase content in the contaminated product to be purified. For larger proportions of heavy phase in the contaminated product the position of the interface, I, can be controlled to move closer to a center of rotation, c, of the disc stack and hereby a larger part of the disc stack 31 will be used for purification of the heavy phase. If both heavy phase and light phase is to be purified in the disc stack the position of the interface, I, should suitably be kept inside the area of the distribution holes 39, i.e. inside the distribution part 41, as shown in Figures 3A and 4A. in Figure 4A the interface, I, has been moved closer to the center of rotation, c, of the disc stack 31 compared to in Figure 3A. This is suitable when the proportion of heavy phase in the contaminated product has been increased. For contaminated products comprising even more heavy phase the position of the interface, I, can be moved further into the disc stack 31 in order to use an even larger part of the disc stack 31 for heavy phase purification. This is illustrated in Figure 5A. Hereby, thanks to the invention both light phase and heavy phase can be efficiently purified within the same disc stack centrifugal separator 3. The proportion of heavy phase is determined, and a backpressure provided to one of the light phase or heavy phase outlets, 5a, 5b of the disc stack centrifugal separator 3 is controlled in dependence of said determined proportion of heavy phase in order for adjusting the position of the interface, I, between heavy phase and light phase in the disc stack 31.

At least one pressure control device 11a, 11b is provided in fluid connection with at least one of a light phase outlet 5a of the disc stack centrifugal separator 3 and a heavy phase outlet 5b of the disc stack centrifugal separator 3. The pressure control device 11a, 11b can be for example a control valve 11a, 11b provided to a light phase fluid line 14a connected to the light phase outlet 5a and/or to a heavy phase fluid line 14b connected to the heavy phase outlet 5b. Hereby a level of backpressure provided to the light phase outlet 5a and/or the heavy phase outlet 5b can be controlled by controlling the at least one pressure control device 11a, 11b. Either the backpressure for only one of the heavy phase or light phase outlets 5a, 5b is controlled according to the invention and hereby provided with a pressure control device 11a, 11b or both of the heavy and light phase outlets 5a, 5b can be controlled. According to the invention a level of backpressure provided to the light phase outlet 5a and/or the heavy phase outlet 5b can be controlled by controlling the at least one pressure control device 11a, 11b, whereby a position of an interface between a light phase and a heavy phase in the disc stack 31 during purification of the contaminated product will be adjusted in response to said controlling of the backpressure.

In order to control a position of the interface in the disc stack 31 only one of the heavy phase outlet 5b or the light phase outlet 5a has to be controlled by providing a controlled back pressure according to the invention. In Figure 1 it is however shown to be control valves 11a, 11b provided in connection with both the light phase outlet 5a and the heavy phase outlet 5b. Backpressure control of only one of the outlets 5a, 5b is enough and the other components may therefore be omitted.

According to one embodiment of the invention the purification system 1 comprises further a heavy phase determination arrangement 15a, b, c which is configured for determining a proportion of heavy phase content in the contaminated product which is to be purified in the purification system. The heavy phase determination arrangement 15a, b, c may comprise one or more sensors 15a, b, c which are configured for measuring one or more features which can be used for determining the proportion of heavy phase content in the contaminated product. More specifically the heavy phase determination arrangement may comprise one or more of: a water in oil sensor 15a (heavy phase content in light phase sensor) provided in connection with the inlet 4, flow sensors 15b provided in connection with one or more of the inlet 4, the light phase outlet 5a and the one or more heavy phase outlet 5b, 5b' and a fluid level sensor or a load sensor 15c provided in a heavy phase collection tank 16 connected to the heavy phase outlet 5b, 5b'. An amount of heavy phase retrieved from the disc stack centrifugal separator 3 can be measured for example by a flow sensor 15b provided in connection with the at least one heavy phase outlet 5b, 5b' or by a fluid level sensor or a load sensor 15c provided in the heavy phase collection tank 16. If heavy phase is transported out from the heavy phase collection tank 16 at a known flow rate, changes measured by the fluid level sensor 15c or load sensor 15c can be registered for determining the proportion of heavy phase in the contaminated product to be purified.

By comparing this amount of heavy phase with an amount of contaminated product provided into the disc stack centrifugal separator 3 during the same time period a proportion of heavy phase in the contaminated product can be determined. Alternatively, the corresponding amount of light phase can be determined by measuring light phase flow rate in the light phase outlet or amount of light phase in a light phase collection tank and compare this with the incoming flow rate of contaminated product. Another alternative is to detect the proportion of heavy phase in light phase by a water in oil sensor 15a (heavy phase content in light phase sensor) connected in contact with the inlet 4. Hereby a heavy phase determination arrangement 15a,b,c can be designed in different ways and may comprise different types of sensors. Examples of water in oil sensors can be capacitive RH (relative humidity) sensor / ADC - Advance Digital Capacitance / LC-Oscillator + Resistance.

The oil purification system 1 comprises furthermore a control system 21 which is provided in communication contact with the heavy phase determination arrangement 15a,b,c. The control system 21 is further provided in communication contact with the at least one pressure control device 11a, 11b, wherein said pressure control device 11a, 11b can be controlled in dependence of the determined proportion of heavy phase in the contaminated product to be purified. The control device 21 is in communication connection with the heavy phase determination arrangement 15a,b,c and with the at least one pressure control device 11a, 11b, i.e. a wireless or wired connection. The connections with the control system 21 are shown by dotted lines in Figure 1. Suitably at least one pressure sensor 12a, 12b is provided in fluid connection with at least one of the light phase outlet 5a or the heavy phase outlet 5b. In Figure 1 a light phase pressure sensor 12a is provided in connection with the light phase outlet 5a. The light phase pressure sensor 12a is here provided in the light phase fluid line 14a connected to the light phase fluid outlet 5a. Correspondingly a heavy phase pressure sensor 12b may be provided in connection with the heavy phase outlet 5b, for example provided in the heavy phase fluid line 14b which is connected to the heavy phase outlet 5b. However, only one of these two pressure sensors 14a, 14b would be needed for controlling a back pressure to only one of the heavy and light phase outlets 5a, 5b. The light phase pressure sensor 12a and/or the heavy phase pressure sensor 12b are also provided in connection with the control system 21 and hereby the control system 21 can control the at least one pressure control device 11a, 11b according to readings from this at least one pressure sensor 12a, 12b.

Said control system 21 may be configured to control the at least one pressure control device 11a, 11b such that the backpressure provided to the heavy phase outlet 5b and/or light phase outlet 5a is adjusted continuously or repeatedly at predefined intervals. Hereby the centrifugal separator 3 can be adopted for different conditions continuously or at repeated intervals. For example if the proportions between heavy phase and light phase in the contaminated product is changed due to for example different batches of contaminated products this change will be measured by the heavy phase determination arrangement 15a,b,c and the backpressure provided to the heavy phase outlet 5b or the light phase outlet 5a can be controlled by a suitable and corresponding amount such that the position of the interface, I, between heavy phase and light phase in the disc stack 31 is moved a suitable distance. The control system 21 is in some embodiments configured to control the backpressure such that a position of an interface, I, between heavy phase and light phase during purification of the contaminated product in the disc stack 31 is moved closer to a center of rotation, c, of the disc stack 31 for increasing proportions of heavy phase content in the contaminated product. The correlation between change in backpressure and movement of position of the interface in the disc stack needs to be calculated since it is depending on density differences heavy phase/light phase, viscosity, flow rate and heavy phase content.

The light phase separated in the disc stack centrifugal separator 3 in the oil purification system 1 according to the invention can be oil of different types. The heavy phase can for example be water, water comprising salt, such as brine or water with added mono ethylene glycol (MEG).

In Figure 6 a flow chart of a method for purification of contaminated product according to one embodiment of the invention is shown. The method steps are described below:
S1: Providing contaminated product into a disc stack centrifugal separator 3 of a purification system 1 as described above in relation to Figures 1, 3, 4 and 5.
S2: Separating the contaminated product in the disc stack centrifugal separator 3 into a light phase and a heavy phase.
S3: Retrieving the separated light phase from a light phase outlet 5a of the disc stack centrifugal separator 3 and retrieving the separated heavy phase from a heavy phase outlet 5b of the disc stack centrifugal separator 3.
S4: Determining a proportion of heavy phase content in the contaminated product to be purified. This can be determined in different ways by the heavy phase determination arrangement 15a,b,c as described above.
S5: Controlling a backpressure provided to the heavy phase outlet 5b and/or the light phase outlet 5a of the disc stack centrifugal separator 3 and hereby controlling a position of the interface, I, between the heavy phase and the light phase during purification of the contaminated product in the disc stack 31 of the disc stack centrifugal separator 3, said controlling being dependent on the determined proportion of heavy phase content in the contaminated product to be purified.

The step of controlling a backpressure, S5, may comprise controlling the backpressure provided to the heavy phase outlet 5b, and/or the light phase outlet 5a in dependence of the determined proportion of heavy phase content in the contaminated product such that the disc stack 31 can be used for purification of both the light phase and the heavy phase. Hereby the method is a method for purification of a contaminated product wherein both the light phase and the heavy phase can be purified in the disc stack 31 of the disc stack centrifugal separator 3.

The step of controlling a backpressure, S5, comprises controlling the backpressure such that the position of the interface between heavy phase and light phase in the disc stack 31 is moved closer to a center of rotation, c, of the disc stack 31 for increasing proportions of heavy phase content in the contaminated product.

Said steps of determining a proportion, S4, and controlling a backpressure, S5, may be performed continuously or repeatedly at predefined intervals during purification of the contaminated product.

In some embodiments of the invention the step of controlling a backpressure, S5, comprises controlling a control valve 11b provided to the heavy phase outlet 5b, and/or a control valve 11a provided to the light phase outlet 5a of the disc stack centrifugal separator 3.

A computer program product is also provided. Said computer program product comprises instructions which, when executed in a processor 22 in the control system 21 of the purification system 1 according to the invention, cause the control system 21 to perform the method as described above in relation to Figure 6.

## Claims

1. A purification system (1) for purification of a contaminated product, said purification system (1) comprising:
- a disc stack centrifugal separator (3), wherein said disc stack centrifugal separator comprises:
∘ an inlet (4) for receiving the contaminated product to be purified in said disc stack centrifugal separator (3);
∘ a disc stack (31) comprising a number of stacked discs (33), wherein each disc (33) has a form of a truncated cone having a curved surface area (35) limited by a base periphery (37a) and a top periphery (37b), wherein said curved surface area (35) comprises distribution holes (39) separated around a circumference of the disc (33), wherein the distribution holes (39) are provided for allowing fluid distribution between the discs (33) in the disc stack (31), at least one light phase outlet (5a) connected to the disc stack (31) for transferring separated light phase out from the disc stack centrifugal separator (3) and
at least one heavy phase outlet (5b, 5b') connected to the disc stack (31) for transferring separated heavy phase out from the disc stack centrifugal separator (3);
**characterised in that**,
said distribution holes (39) are sized and positioned for distributing the contaminated product to be purified over a distribution part (41) of the curved surface area (35) of the disc (33), wherein said distribution part (41) is extending around the circumference of the disc (33) and over 20%-70% of a total distance, d, between the base periphery (37a) and the top periphery (37b), wherein said distribution part (41) of the curved surface area (35) is provided closer to the base periphery (37a) than to the top periphery (37b);
- at least one pressure control device (11a, 11b) provided in connection with at least one of the light phase outlet (5a) of the disc stack centrifugal separator (3) and the heavy phase outlet (5b) of the disc stack centrifugal separator (3), whereby a level of backpressure provided to the light phase outlet (5a) and/or the heavy phase outlet (5b) can be controlled by controlling the at least one pressure control device (11a, 11b), whereby a position of an interface between a light phase and a heavy phase in the disc stack (31) during purification of the contaminated product will be adjusted in response to said controlling of the backpressure.

2. Purification system according to claim 1, wherein said distribution part (41) is extending around the circumference of the disc (33) and over 25%-60% of the total distance, d, between the base periphery (37a) and the top periphery (37b).

3. Purification system according to claim 1 or 2, further comprising a heavy phase determination arrangement (15a, b, c) positioned in the purification system (1) and configured for determining a proportion of heavy phase content in the contaminated product which is to be purified in the purification system.

4. Purification system according to claim 3, further comprising a control system (21) which is provided in communication contact with the heavy phase determination arrangement (15a, b, c) and with the at least one pressure control device (11a, 11b), wherein said control system (21) is configured to control the at least one pressure control device (11a, 11b) in dependence of the proportion of heavy phase content in the contaminated product determined by the heavy phase determination arrangement (15a, b, c), wherein said control system (21) is particularly configured to control the at least one pressure control device (11a, 11b) such that the backpressure provided to the heavy phase outlet (5b) and/or light phase outlet (5a) is adjusted continuously or repeatedly at predefined intervals, and/or wherein the control system (21) is particularly configured to control the backpressure such that a position of an interface between heavy phase and light phase during purification of the contaminated product in the disc stack (31) is moved closer to a center of rotation, c, of the disc stack (31) for increasing proportions of heavy phase content in the contaminated product.

5. Purification system according to any one of the preceding claims, wherein the heavy phase determination arrangement (15a, b, c) comprises one or more of: a water in oil sensor (15a) provided in connection with the inlet (4), flow sensors (15b) provided in connection with one or more of the inlet (4), the light phase outlet (5a) and the heavy phase outlet (5b) and a fluid level sensor or load sensor (15c) provided in a heavy phase collection tank (16) connected to the heavy phase outlet (5b).

6. Purification system according to any one of the preceding claims, wherein said distribution holes (39) are elongated holes extending in a direction from the base periphery (37a) to the top periphery (37b), wherein said distribution holes (39) particularly have a length, 1, being between 20%-70% or between 25%-50% of the distance, d, between the base periphery (37a) and the top periphery (37b) and wherein said distribution holes (39) are particularly positioned closer to the base periphery (37a) than to the top periphery (37b).

7. Purification system according to any one of the preceding claims, further comprising at least one pressure sensor (12a, 12b) which is provided in fluid connection with at least one of the light phase outlet (5a) or the heavy phase outlet (5b), wherein said at least one pressure sensor (12a, 12b) is provided in communication contact with said control system (21) and whereby said control system (21) is configured to control said at least one pressure control device (11a, 11b) further in dependence on a reading from said at least one pressure sensor (12a, 12b).

8. Purification system according to any one of the preceding claims, further comprising a contaminated product tank (23) comprising contaminated product to be purified, wherein said contaminated product tank (23) comprises an outlet (25) which is fluidly connected to the inlet (4) of the disc stack centrifugal separator (3) possibly via one or more further oil treatment units (28).

9. Purification system according to any one of the preceding claims, wherein said at least one pressure control device (11a, 11b) is at least one control valve provided to a light phase fluid line (14a) connected to the light phase outlet (5a) and/or to a heavy phase fluid line (14b) connected to the heavy phase outlet (5b).

10. A method for purification of a contaminated product in a purification system according to any one of the preceding claims, said method comprising the steps of:
- providing (S1) the contaminated product into the disc stack centrifugal separator (3);
- separating (S2) the contaminated product in the disc stack centrifugal separator (3) into a light phase and a heavy phase;
- retrieving (S3) the separated light phase from the light phase outlet (5a) of the disc stack centrifugal separator (3) and retrieving the separated heavy phase from the heavy phase outlet (5b) of the disc stack centrifugal separator (3);
- determining (S4) a proportion of heavy phase content in the contaminated product which is to be purified;
- controlling (S5) a backpressure provided to the heavy phase outlet (5b) and/or the light phase outlet (5a) of the disc stack centrifugal separator (3) and hereby controlling a position of an interface between heavy phase and light phase during purification of the contaminated product in the disc stack (31) of the disc stack centrifugal separator (3), said controlling being dependent on the determined proportion of heavy phase content in the contaminated product.

11. Method according to claim 10, wherein said step of controlling (S5) comprises controlling the backpressure provided to the heavy phase outlet (5b) and/or the light phase outlet (5a) in dependence of the determined proportion of heavy phase content in the contaminated product such that the disc stack (31) can be used for purification of both the light phase and the heavy phase, whereby the method is a method for purification of a contaminated product wherein both the light phase and the heavy phase can be purified in the disc stack (31) of the disc stack centrifugal separator (3).

12. Method according to claim 10 or 11, wherein the step of controlling (S5) a backpressure comprises controlling the backpressure such that the position of the interface between heavy phase and light phase in the disc stack (31) is moved closer to a center of rotation, c, of the disc stack (31) for increasing proportions of heavy phase content in the contaminated product.

13. Method according to any one of the claims 10 to 12, wherein said steps of determining (S4) a proportion of heavy phase content and controlling (S5) a backpressure are performed continuously or repeatedly at predefined intervals during purification of contaminated product.

14. Method according to any one of the claims 10 to 13, wherein the step of determining (S4) a proportion of heavy phase content comprises one or more of: determining a proportion of heavy phase in the contaminated product using a water in oil sensor (15a) provided in connection with the inlet (4), measuring and comparing flows by use of flow sensors (15b) provided in connection with one or more of the inlet (4), the light phase outlet (5a) and the heavy phase outlet (5b) and measuring a fluid level or a load by a fluid level sensor or load sensor (15c) provided in a heavy phase collection tank (16) connected to the heavy phase outlet (5b), and/or wherein said step of controlling (S5) a backpressure comprises controlling the pressure control device (11b) provided in connection with the heavy phase outlet (5b) and/or the pressure control device (11a) provided in connection with the light phase outlet (5a) of the disc stack centrifugal separator (3).

15. A computer program product comprising instructions which, when executed in a processor (22) in a control system (21) of the purification system (1) according to any one of the patent claims 1-9, cause the control system (21) to perform the method according to any one of the claims 10-14.

## Patentansprüche

1. Reinigungssystem (1) zur Reinigung eines verunreinigten Produkts, wobei das Reinigungssystem (1) Folgendes umfasst:
- einen Scheibenstapel-Zentrifugalseparator (3), wobei der Scheibenstapel-Zentrifugalseparator Folgendes umfasst:
∘ einen Einlass (4) zur Aufnahme des zu reinigenden verunreinigten Produkts in dem Scheibenstapel-Zentrifugalseparator (3),
∘ einen Scheibenstapel (31), der eine Anzahl gestapelter Scheiben (33) umfasst, wobei jede Scheibe (33) eine Form eines Kegelstumpfs mit einer gekrümmten Oberfläche (35) aufweist, die durch einen Basisumfang (37a) und einen oberen Umfang (37b) begrenzt ist, wobei die gekrümmte Oberfläche (35) Verteilungslöcher (39) umfasst, die um einen Umfang der Scheibe (33) herum getrennt sind, wobei die Verteilungslöcher (39) vorgesehen sind, um eine Fluidverteilung zwischen den Scheiben (33) in dem Scheibenstapel (31) zu gestatten, mindestens einen Leichte-Phase-Auslass (5a), der mit dem Scheibenstapel (31) verbunden ist, um abgetrennte leichte Phase aus dem Scheibenstapel-Zentrifugalseparator (3) heraus zu transferieren, und
mindestens einen Schwere-Phase-Auslass (5b, 5b'), der mit dem Scheibenstapel (31) verbunden ist, um abgetrennte schwere Phase aus dem Scheibenstapel-Zentrifugalabscheider (3) heraus zu transferieren,
**dadurch gekennzeichnet, dass**
die
Verteilungslöcher (39) zum Verteilen des zu reinigenden verunreinigten Produkts über einen Verteilungsteil (41) der gekrümmten Oberfläche (35) der Scheibe (33) bemessen und positioniert sind, wobei sich der Verteilungsteil (41) um den Umfang der Scheibe (33) herum und über 20% - 70% eines Gesamtabstands, d, zwischen dem Basisumfang (37a) und dem oberen Umfang (37b) erstreckt, wobei der Verteilungsteil (41) der gekrümmten Oberfläche (35) näher an dem Basisumfang (37a) als an dem oberen Umfang (37b) vorgesehen ist,
- mindestens eine Drucksteuervorrichtung (11a, 11b), die in Verbindung mit dem Leichte-Phase-Auslass (5a) des Scheibenstapel-Zentrifugalseparators (3) und/oder dem Schwere-Phase-Auslass (5b) des Scheibenstapel-Zentrifugalseparators (3) vorgesehen ist, wobei ein für den Leichte-Phase-Auslass (5a) und/oder den Schwere-Phase-Auslass (5b) bereitgestelltes Gegendruckniveau durch Steuerung der mindestens einen Drucksteuervorrichtung (11a, 11b) steuerbar ist, wodurch eine Position einer Grenzfläche zwischen einer leichten Phase und einer schweren Phase in dem Scheibenstapel (31) während der Reinigung des verunreinigten Produkts als Reaktion auf die Steuerung des Gegendrucks verstellt wird.

2. Reinigungssystem nach Anspruch 1, wobei sich der Verteilungsteil (41) um den Umfang der Scheibe (33) herum und über 25 % - 60 % des Gesamtabstands, d, zwischen dem Basisumfang (37a) und dem oberen Umfang (37b) erstreckt.

3. Reinigungssystem nach Anspruch 1 oder 2, ferner umfassend eine Schwere-Phase-Bestimmungsanordnung (15a, b, c), die in dem Reinigungssystem (1) positioniert und zum Bestimmen eines Anteils an Schwere-Phase-Gehalt in dem verunreinigten Produkt ausgestaltet ist, das in dem Reinigungssystem gereinigt werden soll.

4. Reinigungssystem nach Anspruch 3, ferner umfassend ein Steuersystem (21), das in Kommunikationsverbindung mit der Schwere-Phase-Bestimmungsanordnung (15a, b, c) und mit der mindestens einen Drucksteuervorrichtung (11a, 11b) vorgesehen ist, wobei das Steuersystem (21) dazu ausgestaltet ist, die mindestens eine Drucksteuervorrichtung (11a, 11b) in Abhängigkeit von dem Anteil an Schwere-Phase-Gehalt in dem verunreinigten Produkt zu steuern, der durch die Schwere-Phase-Bestimmungsanordnung (15a, b, c) bestimmt wird, wobei das Steuersystem (21) insbesondere dazu ausgestaltet ist, die mindestens eine Drucksteuervorrichtung (11a, 11b) so zu steuern, dass der dem Schwere-Phase-Auslass (5b) und/oder dem Leichte-Phase-Auslass (5a) bereitgestellte Gegendruck kontinuierlich oder wiederholt in vordefinierten Intervallen verstellt wird, und/oder wobei das Steuersystem (21) insbesondere dazu ausgestaltet ist, den Gegendruck so zu steuern, dass eine Position einer Grenzfläche zwischen schwerer Phase und leichter Phase während der Reinigung des verunreinigten Produkts in dem Scheibenstapel (31) näher an ein Drehzentrum, c, des Scheibenstapels (31) bewegt wird, um Anteile des Schwere-Phase-Gehalts in dem verunreinigten Produkt zu erhöhen.

5. Reinigungssystem nach einem der vorhergehenden Ansprüche, wobei die Schwere-Phase-Bestimmungsanordnung (15a, b, c) eines oder mehrere von Folgendem umfasst: einen Wasser-in-Öl-Sensor (15a), der in Verbindung mit dem Einlass (4) vorgesehen ist, Durchflusssensoren (15b), die in Verbindung mit dem Einlass (4) und/oder dem Leichte-Phase-Auslass (5a) und/oder dem Schwere-Phase-Auslass (5b) vorgesehen sind, und einen Fluidniveausensor oder Lastsensor (15c), der in einem Schwere-Phase-Sammeltank (16) vorgesehen ist, der mit dem Schwere-Phase-Auslass (5b) verbunden ist.

6. Reinigungssystem nach einem der vorhergehenden Ansprüche, wobei die Verteilungslöcher (39) Langlöcher sind, die sich in einer Richtung von dem Basisumfang (37a) zu dem oberen Umfang (37b) erstrecken, wobei die Verteilungslöcher (39) insbesondere eine Länge, 1, aufweisen, die zwischen 20% - 70% oder zwischen 25% - 50% des Abstands, d, zwischen dem Basisumfang (37a) und dem oberen Umfang (37b) beträgt, und wobei die Verteilungslöcher (39) insbesondere näher an dem Basisumfang (37a) als an dem oberen Umfang (37b) angeordnet sind.

7. Reinigungssystem nach einem der vorhergehenden Ansprüche, ferner umfassend mindestens einen Drucksensor (12a, 12b), der in Fluidverbindung mit dem Leichte-Phase-Auslass (5a) und/oder dem Schwere-Phase-Auslass (5b) vorgesehen ist, wobei der mindestens eine Drucksensor (12a, 12b) in Kommunikationsverbindung mit dem Steuersystem (21) vorgesehen ist und wobei das Steuersystem (21) dazu gestaltet ist, die mindestens eine Drucksteuervorrichtung (11a, 11b) ferner abhängig von einem Messwert des mindestens einen Drucksensors (12a, 12b) zu steuern.

8. Reinigungssystem nach einem der vorhergehenden Ansprüche, ferner umfassend einen Tank (23) für verunreinigtes Produkt, der zu reinigendes verunreinigtes Produkt umfasst, wobei der Tank (23) für verunreinigtes Produkt einen Auslass (25) umfasst, der möglicherweise über eine oder mehrere weitere Ölbehandlungseinheiten (28) fluidisch mit dem Einlass (4) des Scheibenstapel-Zentrifugalseparators (3) verbunden ist.

9. Reinigungssystem nach einem der vorhergehenden Ansprüche, wobei die mindestens eine Drucksteuervorrichtung (11a, 11b) mindestens ein Steuerventil ist, das an einer Leichte-Phase-Fluidleitung (14a), die mit dem Leichte-Phase-Auslass (5a) verbunden ist, und/oder an einer Schwere-Phase-Fluidleitung (14b), die mit dem Schwere-Phase-Auslass (5b) verbunden ist, vorgesehen ist.

10. Verfahren zur Reinigung eines verunreinigten Produkts in einem Reinigungssystem nach einem der vorhergehenden Ansprüche, wobei das Verfahren die folgenden Schritte umfasst:
- Zuführen (S1) des verunreinigten Produkts in den Scheibenstapel-Zentrifugalseparator (3),
- Auftrennen (S2) des verunreinigten Produkts in dem Scheibenstapel-Zentrifugalseparator (3) in eine leichte Phase und eine schwere Phase,
- Entnehmen (S3) der abgetrennten leichten Phase aus dem Leichte-Phase-Auslass (5a) des Scheibenstapel-Zentrifugalseparators (3) und Entnehmen der abgetrennten schweren Phase aus dem Schwere-Phase-Auslass (5b) des Scheibenstapel-Zentrifugalseparators (3),
- Bestimmen (S4) eines Anteils des Schwere-Phase-Gehalts in dem zu reinigenden verunreinigten Produkt,
- Steuern (S5) eines Gegendrucks, der für den Schwere-Phase-Auslass (5b) und/oder den Leichte-Phase-Auslass (5a) des Scheibenstapel-Zentrifugalseparators (3) bereitgestellt wird, und dadurch Steuern einer Position einer Grenzfläche zwischen schwerer Phase und leichter Phase während der Reinigung des verunreinigten Produkts im Scheibenstapel (31) des Scheibenstapel-Zentrifugalseparators (3), wobei die Steuerung von dem bestimmten Anteil des Schwere-Phase-Gehalts in dem verunreinigten Produkt abhängt.

11. Verfahren nach Anspruch 10, wobei der Schritt des Steuerns (S5) das Steuern des Gegendrucks umfasst, der für den Schwere-Phase-Auslass (5b) und/oder den Leichte-Phase-Auslass (5a) in Abhängigkeit von dem bestimmten Anteil des Schwere-Phase-Gehalts in dem verunreinigten Produkt bereitgestellt wird, so dass der Scheibenstapel (31) zur Reinigung sowohl der leichten Phase als auch der schweren Phase verwendet werden kann, wobei das Verfahren ein Verfahren zur Reinigung eines verunreinigten Produkts ist, bei dem sowohl die leichte Phase als auch die schwere Phase in dem Scheibenstapel (31) des Scheibenstapel-Zentrifugalseparators (3) gereinigt werden können.

12. Verfahren nach Anspruch 10 oder 11, wobei der Schritt des Steuerns (S5) eines Gegendrucks das derartige Steuern des Gegendrucks umfasst, dass die Position der Grenzfläche zwischen schwerer Phase und leichter Phase in dem Scheibenstapel (31) näher an ein Drehzentrum, c, des Scheibenstapels (31) bewegt wird, um Anteile des Schwere-Phase-Gehalts in dem verunreinigten Produkt zu erhöhen.

13. Verfahren nach einem der Ansprüche 10 bis 12, wobei die Schritte des Bestimmens (S4) eines Anteils von Schwere-Phase-Gehalt und des Steuerns (S5) eines Gegendrucks kontinuierlich oder wiederholt in vordefinierten Intervallen während der Reinigung von verunreinigtem Produkt durchgeführt werden.

14. Verfahren nach einem der Ansprüche 10 bis 13, wobei der Schritt des Bestimmens (S4) eines Anteils an Schwere-Phase-Gehalt eines oder mehrere der Folgenden umfasst: Bestimmen eines Anteils an schwerer Phase in dem verunreinigten Produkt unter Verwendung eines Wasser-in-Öl-Sensors (15a), der in Verbindung mit dem Einlass (4) vorgesehen ist, Messen und Vergleichen von Strömen unter Verwendung von Durchflusssensoren (15b), die in Verbindung mit dem Einlass (4) und/oder dem Leichte-Phase-Auslass (5a) und/oder dem Schwere-Phase-Auslass (5b) vorgesehen sind, und Messen eines Fluidniveaus oder einer Last durch einen Fluidniveausensor oder Lastsensor (15c), der in einem mit dem Schwere-Phase-Auslass (5b) verbundenen Schwere-Phase-Sammeltank (16) vorgesehen ist, und/oder wobei der Schritt des Steuerns (S5) eines Gegendrucks das Steuern der Drucksteuervorrichtung (11b) umfasst, die in Verbindung mit dem Schwere-Phase-Auslass (5b) vorgesehen ist, und/oder der Drucksteuervorrichtung (11a), die in Verbindung mit dem Leichte-Phase-Auslass (5a) des Scheibenstapel-Zentrifugalseparators (3) vorgesehen ist.

15. Computerprogrammprodukt, umfassend Anweisungen, durch die bei Ausführung in einem Prozessor (22) in einem Steuersystem (21) des Reinigungssystems (1) nach einem der Patentansprüche 1 - 9 veranlasst wird, dass das Steuersystem (21) das Verfahren nach einem der Ansprüche 10 - 14 durchführt.

## Revendications

1. Système de purification (1) destiné à purifier un produit contaminé, ledit système de purification (1) comprenant :
- un séparateur centrifuge (3) à empilement de disques, ledit séparateur centrifuge à empilement de disques comprenant :
∘ une entrée (4) destinée à recevoir le produit contaminé à purifier dans ledit séparateur centrifuge (3) à empilement de disques ;
∘ un empilement de disques (31) comprenant un certain nombre de disques empilés (33), chaque disque (33) ayant la forme d'un cône tronqué ayant une surface incurvée (35) limitée par une périphérie de base (37a) et une périphérie supérieure (37b), ladite surface incurvée (35) comprenant des trous de distribution (39) séparés autour d'une circonférence du disque (33), les trous de distribution (39) étant fournis pour permettre une distribution de fluide entre les disques (33) dans l'empilement de disques (31), au moins une sortie de phase légère (5a) reliée à l'empilement de disques (31) pour transférer la phase légère séparée hors du séparateur centrifuge (3) à empilement de disques et
au moins une sortie de phase lourde (5b, 5b') reliée à l'empilement de disques (31) pour transférer une phase lourde séparée du séparateur centrifuge (3) à empilement de disques ;
**caractérisé en ce que**,
lesdits
trous de distribution (39) sont dimensionnés et positionnés pour distribuer le produit contaminé à purifier sur une partie de distribution (41) de la surface incurvée (35) du disque (33), ladite partie de distribution (41) s'étendant sur la circonférence du disque (33) et sur 20 % à 70 % d'une distance totale, d, entre la périphérie de base (37a) et la périphérie supérieure (37b), ladite partie de distribution (41) de la surface incurvée (35) étant fournie plus près de la périphérie de base (37a) que de la périphérie supérieure (37b) ;
- au moins un dispositif de régulation de pression (11a, 11b) disposé en raccord avec la sortie de phase légère (5a) du séparateur centrifuge (3) à empilement de disques et/ou la sortie de phase lourde (5b) du séparateur centrifuge (3) à empilement de disques, moyennant quoi un niveau de contre-pression appliqué à la sortie de phase légère (5a) et/ou à la sortie de phase lourde (5b) peut être régulé par l'au moins un dispositif de régulation de pression (11a, 11b), moyennant quoi une position d'une interface entre une phase légère et une phase lourde dans l'empilement de disques (31) lors de la purification du produit contaminé sera ajustée en réponse à ladite régulation de la contre-pression.

2. Système de purification selon la revendication 1, ladite partie de distribution (41) s'étendant autour de la circonférence du disque (33) et sur 25 % à 60 % de la distance totale, d, entre la périphérie de base (37a) et la périphérie supérieure (37b).

3. Système de purification selon la revendication 1 ou 2, comprenant en outre un dispositif de détermination de phase lourde (15a, b, c) positionné dans le système de purification (1) et conçu pour déterminer une proportion de teneur en phase lourde dans le produit contaminé qui doit être purifié dans le système de purification.

4. Système de purification selon la revendication 3, comprenant en outre un système de commande (21) qui est disposé en communicaiton par contact avec le dispositif de détermination de phase lourde (15a, b, c) et avec l'au moins un dispositif de régulation de pression (11a, 11b), ledit système de régulation (21) étant conçu pour commander l'au moins un dispositif de régulation de pression (11a, 11b) en fonction de la proportion de teneur en phase lourde dans le produit contaminé déterminée par le dispositif de détermination de phase lourde (15a, b, c), ledit système de commande (21) étant en particulier conçu pour commander l'au moins un dispositif de régulation de pression (11a, 11b) de sorte que la contre-pression appliquée à la sortie de phase lourde (5b) et/ou à la sortie de phase légère (5a) soit ajustée de manière continue ou répétée à des intervalles prédéfinis, et/ou le système de commande (21) étant particulièrement conçu pour commander la contre-pression de sorte qu'une position d'une interface entre phase lourde et phase légère pendant la purification du produit contaminé dans l'empilement de disques (31) soit rapprochée d'un centre de rotation, c, de l'empilement de disques (31) pour augmenter les proportions de teneur en phase lourde dans le produit contaminé.

5. Système de purification selon l'une quelconque des revendications précédentes, le dispositif de détermination de phase lourde (15a, b, c) comprenant un ou plusieurs éléments parmi : un capteur d'eau dans l'huile (15a) disposé en raccord avec l'entrée (4), des capteurs d'écoulement (15b) disposés en raccord avec l'entrée (4), la sortie de phase légère (5a) et/ou la sortie de phase lourde (5b) et un capteur de niveau de fluide ou de charge (15c) situé dans un réservoir de collecte de phase lourde (16) relié à la sortie de phase lourde (5b).

6. Système de purification selon l'une quelconque des revendications précédentes, lesdits trous de distribution (39) étant des trous allongés s'étendant dans une direction depuis la périphérie de base (37a) vers la périphérie supérieure (37b), lesdits trous de distribution (39) ayant en particulier une longueur, 1, qui est comprise entre 20 % et 70 % ou entre 25 % et 50 % de la distance, d, entre la périphérie de base (37a) et la périphérie supérieure (37b), lesdits trous de distribution (39) étant en particulier positionnés plus près de la périphérie de base (37a) que de la périphérie supérieure (37b).

7. Système de purification selon l'une quelconque des revendications précédentes, comprenant en outre au moins un capteur de pression (12a, 12b) qui est disposé en communication fluidique avec la sortie de phase légère (5a) et/ou la sortie de phase lourde (5b), ledit au moins un capteur de pression (12a, 12b) étant disposé en communication par contact avec ledit système de commande (21), et moyennant quoi ledit système de commande (21) est conçu pour commander ledit au moins un dispositif de régulation de pression (11a, 11b) également en fonction d'une lecture provenant dudit au moins un capteur de pression (12a, 12b).

8. Système de purification selon l'une quelconque des revendications précédentes, comprenant en outre un réservoir de produit contaminé (23) comprenant un produit contaminé à purifier, ledit réservoir de produit contaminé (23) comprenant une sortie (25) qui est en communication fluidique avec l'entrée (4) du séparateur centrifuge (3) à empilement de disques éventuellement par l'intermédiaire d'une ou de plusieurs autres unités de traitement d'huile (28).

9. Système de purification selon l'une quelconque des revendications précédentes, ledit au moins un dispositif de régulation de pression (11a, 11b) étant au moins une vanne de régulation équipant une conduite de fluide de phase légère (14a) raccordée à la sortie de phase légère (5a) et/ou une conduite de fluide de phase lourde (14b) raccordée à la sortie de phase lourde (5b).

10. Procédé de purification d'un produit contaminé dans un système de purification selon l'une quelconque des revendications précédentes, ledit procédé comprenant les étapes de :
- fourniture (S1) du produit contaminé dans le séparateur centrifuge (3) à empilement de disques ;
- séparation (S2) du produit contaminé dans le séparateur centrifuge (3) à empilement de disques en une phase légère et une phase lourde ;
- récupération (S3) de la phase légère séparée depuis la sortie de phase légère (5a) du séparateur centrifuge (3) à empilement de disques et récupération de la phase lourde séparée depuis la sortie de phase lourde (5b) du séparateur centrifuge (3) à empilement de disques ;
- détermination (S4) d'une proportion de teneur en phase lourde dans le produit contaminé qui est à purifier ;
- régulation (S5) d'une contre-pression appliquée à la sortie de phase lourde (5b) et/ou à la sortie de phase légère (5a) du séparateur centrifuge (3) à empilement de disques et régulation de la position d'une interface entre phase lourde et phase légère lors de la purification du produit contaminé dans l'empilement de disques (31) du séparateur centrifuge (3) à empilement de disques, ladite régulation étant fonction de la proportion déterminée de teneur en phase lourde dans le produit contaminé.

11. Procédé selon la revendication 10, ladite étape de régulation (S5) comprenant la régulation de la contre-pression appliquée à la sortie de phase lourde (5b) et/ou à la sortie de phase légère (5a) en fonction de la proportion déterminée de teneur en phase lourde dans le produit contaminé de sorte que l'empilement de disques (31) puisse être utilisé pour purifier à la fois la phase légère et la phase lourde, moyennant quoi le procédé est un procédé de purification d'un produit contaminé, la phase légère et la phase lourde pouvant être purifiées dans l'empilement de disques (31) du séparateur centrifuge (3) à empilement de disques.

12. Procédé selon la revendication 10 ou 11, l'étape de régulation (S5) d'une contre-pression comprenant la régulation de la contre-pression de sorte que la position de l'interface entre la phase lourde et la phase légère dans l'empilement de disques (31) soit rapprochée d'un centre de rotation, c, de l'empilement de disques (31) pour augmenter les proportions de la teneur en phase lourde dans le produit contaminé.

13. Procédé selon l'une quelconque des revendications 10 à 12, lesdites étapes de détermination (S4) d'une proportion d'une teneur en phase lourde et de régulation (S5) d'une contre-pression étant effectuées de façon continue ou répétée à des intervalles prédéfinis pendant la purification du produit contaminé.

14. Procédé selon l'une quelconque des revendications 10 à 13, l'étape de détermination (S4) d'une proportion de teneur en phase lourde comprenant : la détermination d'une proportion de phase lourde dans le produit contaminé à l'aide d'un capteur d'eau dans l'huile (15a) disposé en raccord avec l'entrée (4), mesure et la comparaison des débits à l'aide de capteurs de débit (15b) disposé en raccord avec l'entrée (4), la sortie de phase légère (5a) et/ou la sortie de phase lourde (5b) et/ou la mesure d'un niveau de fluide ou d'une charge par un capteur de niveau de fluide ou de charge (15c) situé dans un bac réservoir de collecte de phase lourde (16) raccordé à la sortie de phase lourde (5b), et/ou ladite étape de régulation (S5) d'une contre-pression comprenant la régulation du dispositif de régulation de pression (11b) disposé en raccord avec la sortie de phase lourde (5b) et/ou du dispositif de commande de pression (11a) disposé en raccord avec la sortie de phase légère (5a) du séparateur centrifuge (3) à empilement de disques.

15. Produit-programme informatique comprenant des instructions qui, lorsqu'elles sont exécutées dans un processeur (22) dans un système de commande (21) du système de purification (1) selon l'une quelconque des revendications 1 à 9, amènent le système de commande (21) à exécuter le procédé selon l'une quelconque des revendications 10 à 14.
